(19) Europäisches Patentamt
European Patent Office
Office européen des brevets

(11) **EP 2 820 961 A1**

(12) **EUROPEAN PATENT APPLICATION**

(43) Date of publication:
**07.01.2015 Bulletin 2015/02**

(21) Application number: **13003376.4**

(22) Date of filing: **03.07.2013**

(51) Int Cl.:
*A23L 2/02* (2006.01)    *A23L 2/54* (2006.01)
*A23L 2/84* (2006.01)    *A23L 1/185* (2006.01)
*C12N 9/04* (2006.01)    *C12N 9/08* (2006.01)
*C12P 7/58* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Rudolf Wild GmbH & Co. KG 69214 Eppelheim (DE)**

(72) Inventors:
• **Heidebach, Thomas 68535 Edingen-Neckarhausen (DE)**

• **Sass, Matthias 68723 Oftersheim (DE)**
• **de With, Axel 68723 Plankstadt (DE)**

(74) Representative: **Grünecker, Kinkeldey, Stockmair & Schwanhäusser Anwaltssozietät Leopoldstrasse 4 80802 München (DE)**

(54) **Enzymatic fermentation process**

(57)   The present invention relates to a process of preparing a liquid foodstuff, comprising treating at least one juice and/or one extract having a Brix of more than 10°, with carbohydrate oxidase and catalase at a temperature between -10 °C and +15 °C to obtain a substrate mixture, and dispersing oxygen or an oxygen-containing gas in the substrate mixture, without keeping the pH > 3.5 before or during the treatment by addition of buffering substances or basic substances, to obtain a liquid foodstuff, wherein the final pH is lower than 3.5; and wherein the flow rate of the gas is adjusted according to the following equation:

$$(0.001/x) \text{ to } (0.02/x) \text{ L gas/L substrate mixture/min,}$$

with x being the content of oxygen by volume in the gas.

Fig. 1: Gluconic acid production, expressed as titer (closed symbols) and development of pH (open symbols).

EP 2 820 961 A1

**Description**

The present invention relates to a process of preparing a liquid foodstuff from a juice or extract having a Brix of more than 10°.

The enzymatic conversion of sugar into acids with the help of carbohydrate oxidase and catalase finds many technological applications, particularly in the food industry. In some applications the carbohydrate oxidase is used to remove oxygen from a food product in order to preserve its quality. In other applications, the reduction of the sugar content of the food product is desired.

The enzymatic conversion of sugar into acids involves an oxidation/reduction reaction, catalyzed by carbohydrate oxidase, in which oxygen serves as an electron acceptor. The oxygen is reduced to hydrogen peroxide ($H_2O_2$): sugar + $O_2$ + $H_2O$ → sugar acids + $H_2O_2$. The enzyme catalase catalyzes the reaction: $H_2O_2$ → $H_2O$ + ½ $O_2$.

If the production of a sufficient amount of acids is desired, the addition of catalase is necessary for the removal of hydrogen peroxide, which is an inhibitor of carbohydrate oxidase. It is also required that the reaction medium is continuously supplied with oxygen because the latter is consumed by the reaction.

A well-studied carbohydrate oxidase is glucose oxidase (EC 1.1.3.4, GOX). Gluconic acid can be obtained by transforming glucose into gluconic acid using glucose oxidase. This occurs via the production of glucono-δ-lactone in an aqueous media when oxygen is available. Furthermore, $H_2O_2$ is produced from the reaction, which effectively inhibits GOX at already very low concentrations. On this account, it is common that GOX is used in combination together with the enzyme catalase (EC 1.11.1.6, CAT), subsequently designated as GOX/CAT system, which is capable of converting $H_2O_2$ into $H_2O$ and oxygen (Miron et al., 2004: A mathematical model for glucose oxidase kinetics, including inhibitory, deactivant and diffusional effects and their interactions. Enzyme and microbial technology, 34, 513-522; Wong et al., 2008: Glucose oxidase, natural occurrence, function, properties and industrial applications, Applied Microbial Biotechnology, 78, 927-938).

Reaction of GOX: glucose + $O_2$ + $H_2O$→gluconic acid + 2 $H_2O_2$ and of CAT: $H_2O_2$→$H_2O$ + ½ $O_2$.

The enzymatic fermentation of glucose by means of GOX requires oxygen. This is usually provided by aeration of the substrate mixture with an oxygen containing gas, such as air. Aeration can be conducted by the introduction of oxygen containing air bubbles into the aqueous substrate mixtures by various systems, such as e.g. an air-injector, an aeration frit (membrane system) or an internal-loop airlift reactor. Within this context, it is the goal to build a maximal air-water interface for a maximal duration of time to get a maximal diffusion rate of oxygen from air into the substrate mixture to supply oxygen for the enzyme reaction. However, gas-liquid transfer has been found to be a limiting step of the GOX/CAT bioconversion, as it is commonly the case for many aerobic fermentation processes. This is mainly caused by a low solubility of oxygen in water, especially in comparison with the solubility of the other substrate glucose. A more intense oxygen transfer from gas to liquid can be achieved by increase of the partial pressure of oxygen in the inlet gas stream. However, this solution is not economically applicable at large scale due to high cost (Klein et al., 2002, Biotransformation of glucose to gluconic acid by Aspergillus Niger- study of mass transfer in airlift reactor, Biochemical Engineering Journal, 10, 197-205).

WO-A-96/35800 describes an enzymatic process of the conversion of glucose to gluconic acid by glucose oxidase and catalase. The pH of the solution is stabilized by the addition of buffering substances or basic substances to achieve maximum conversion rates. WO-A-97/24454 relates to the production of gluconic acid from glucose. The authors further recommend maintaining the pH of the glucose solution at from about 5 to about 7. WO-A-03/031635 describes the formation of calcium gluconate by converting glucose in gluconic acid in the presence of a calcium base, such as calcium oxide, calcium hydroxide and/or calcium carbonate, to neutralize the gluconic acid and to serve as calcium source. Thus, the processes claimed in these applications involve working under optimum enzyme activity conditions, achieved by buffering the pH to prevent inhibition due to low pH-values. Aeration is achieved by bubbling with oxygen with an air flow of 1 to 2 L/L substrate/min. WO-A-2010/106170 describes a method to produce an acidic beverage using carbohydrate oxidase and catalase in the conversion of glucose to gluconic acid. The reaction temperature is between 25°C and 45°C and the pH is maintained by the addition of a base, at a suitable constant value between 3.0 and 9.0 to increase the yield of gluconic acid.

EP-A-1935257 suggests the use of GOX/CAT to prepare an acidic sweetener. The authors recommend reaction temperatures between 35°C and 45°C and the addition of a base to maintain the pH at a suitable constant value between 4.5 and 6.2 to increase the yield of gluconic acid formation. It is also indicated that in case no base is added, the pH will eventually lower between 2.5 to about 4, which will lead to the inactivation of the enzyme. Further, a negative sensorial impact was found if the sugar-acid medium is applied in higher dosages in beverages. This may be due to the addition of buffering substances during the GOX/CAT process, which can be lead to a negative sensorial impact.

EP-A-0017708 suggests the use of reaction temperatures between 0°C and 10°C for the production of gluconic acid with immobilized GOX/CAT combination. The applicants emphasize that the pH value must remain constantly within the optimum region of pH 4-7, e.g. by means of the automatic addition of NaOH during the process.

WO-A-2009/016049 discloses a method for impeding oxidation reactions in food products by production of maltobionate from starch or maltose by an enzymatic process. Maltose is converted to maltobionate in the presence of carbohydrate oxidases, such as aldose oxidase, cellobiose oxidase, pyranose oxidase and hexose oxidase and catalase may be added to eliminate unwanted $H_2O_2$.

The general problem of limited oxygen availability in GOX/CAT processes is currently solved by using a high as possible air volume flow expressed as ratio between air and substrate mixture to increase air-water interface. In the patent literature on GOX/CAT processes generally high air volume flows between 0.1-2.0 L air/L substrate mixture/min are recommended, with an average of 1 L air/L substrate mixture/min (EP-A-0017708, WO-A-96/35800; WO-A-97/24454, WO-A-03/031635).

The enzymatic reaction processes disclosed in the prior art are generally limited by consecutive lowering of the pH-value, due to the acid production during the GOX/CAT process and require buffering substances or basic substances to maintain the pH at an optimum value. However, if the GOX/CAT system is applied within the production of liquid foodstuff, the addition of buffering substances can lead to a negative sensorial impact in the foodstuff and is therefore not always feasible.

WO-A-2012/167872 describes a process of preparing a liquid foodstuff from a concentrated sugar solution with a Brix of more than 20°. The flow rate of air is in the range of 0.1 to 2.0 L air/L substrate mixture/min. The final pH is maintained at < 3 without addition of buffering substances. However, if the substrate mixture is not a concentrated pure sugar solution but contains additional substances, such as plant extracts, or is a fruit juice foaming due to aeration can occur.

The maximum applicable air volume for aeration is generally limited by the foaming properties of the substrate mixture. In many applications, such as the above mentioned patents, pure aqueous sugar solutions are used for the process. In this case, foaming is relatively low and does not cause technical problems, even at very high flow rates of 1 L air/L substrate mixture/min as suggested.

In case of more complex glucose containing substrate mixtures, e.g. fruit juices or malt- or tea extracts, foaming caused by aeration is significantly stronger compared with a glucose solution. Concentrated substrate mixtures with higher dry matter (°Brix) foam stronger than diluted substrates. The problem may be slightly attenuated by the addition of various de-foaming agents, but only limited type and amount of these substances are allowed in foodstuffs and the use of mechanical foam destroyers, such as stirring paddles, requires significant additional investment costs.

On this account, it is currently generally not possible to economically use the GOX/CAT System with concentrated substrate mixtures showing a high foaming capacity, such as fruit juice or sugar-enriched tea or malt extract under recommended processing conditions, independent of the aeration system used.

In most ready-to-drink beverages (e.g. soft drinks, fermented drinks), the acid content as well as the sugar-to-acid ratio has to be in a defined, narrow range, to achieve an acceptable or even optimized sensorial impression. In the case of ready-to-drink beverages, the optimal sugar-to-acid ratio can be achieved by the production of sufficient amounts of acid under optimized reaction conditions by means of carbohydrate oxidase, such as GOX.

Although solutions with moderate glucose concentrations are applied in many GOX applications, highly concentrated glucose solutions are suitable as a substrate as well. In beverage concentrates, from which the above-mentioned ready-to-drink beverages can be obtained by dilution with water, the acid concentration, as well as the sugar content and all other ingredients, is several times higher compared to ready-to-drink beverages, leading to a much lower pH during enzymatic conversion compared with the ready-to-drink beverage produced from it.

Furthermore, in comparison to diluted substrate mixture or a pure glucose solution, many of the above mentioned substrate mixtures naturally have a rather low pH between 2.5 and 3.5 (e.g. fruit juices), which may lead to a fast inactivation and thus reduced reaction rate of the enzyme, especially if no buffer is added during the process. This altogether leads to ineffective, very low reaction rates of the process, even if all other product and process parameters are optimized, e.g. a high enzyme concentration.

Under recommended optimal reaction conditions, such as recommended temperature and/or pH range, it is not possible to generate sufficient amounts of gluconic acid required for the beverage concentrate before the pH value is too low to obtain further enzymatic activity. Therefore, a buffering or basic substance is added to keep the pH of the concentrate constant and within the optimum enzyme activity range. In the case of beverages, however, the use of buffers or bases to maintain the pH within the optimum range is not always suitable due to a possible negative sensorial impact.

Furthermore, substrates, such as fruit juices and fruit or plant extracts can have several technological properties, such as colouring. In this case, a high sugar content is not always desired, since it adds calories to the product. Thus, the GOX/CAT treatment can be useful to reduce the sugar content by turning sugar into acid. In this case, a high as possible conversion rate is desired.

For commercial GOX-preparations, recommended reaction conditions in terms of pH are in the range 4 to 7, independent of the enzyme origin. Like any other enzyme, GOX from different origins can differ in their structure and hence their optimum conditions. GOX is mainly produced by *Aspergillus* or *Penicillium* subspecies. Almost all GOX preparations available on the market are produced by *Aspergillus Niger* (Handbook of Food Enzymology, Eds.: Whitaker, J. R., et al., 2003, Marcel Dekker, New York, 425-432). For GOX from *Aspergillus Niger,* the pH of maximum stability was found to be around 5.5 (Miron et al., 2004: A mathematical model for glucose oxidase kinetics, including inhibitory, deactivant and diffusional effects and their interactions. Enzyme and microbial technology, 34, 513-522). At pH lower than 3, the half-life of commercial *Aspergillus Niger* GOX has been found to be less than 20 minutes under assay conditions (Hatzinikolaou et al., 1996: New glucose oxidase from Aspergillus Niger. characterisation and regulation studies of enzyme and gene, Applied Microbial Biotechnology, 46, 371-381). The optimum temperature of GOX from various microbial sources has been reported to be between 25°C-60°C (Gibson et al., 1964: Kinetics and Mechanism of Action of Glucose Oxidase, The Journal of Biological Chemistry, 239, 3927-3934; Wong et al., 2008, Glucose oxidase, natural occurrence, function, properties and industrial applications, Applied Microbial Biotechnology, 78, 927-938; Bankar et al., 2009, Glucose oxidase - an overview, Biotechnology advances, 27, 489-501). According to the Handbook of Food Enzymology (Eds.: Whitaker, J. R., Voragen, A. G. J., Wong, D., 2003, Marcel Dekker, New York, 425-432), an important aspect is the stability of the enzyme GOX under application conditions. Fruit juices and wine have a very low pH of 2.5, conditions in which the enzyme is neither active, nor stable. However, high glucose concentrations in concentrates may lead to a stabilizing effect.

According to Herrmann et al. (1965, Die Aktivität von Glucoseoxidase in Abhängigkeit von Temperatur, Wassergehalt und pH-Wert, Food/Nahrung, 9(6), 659-667), the glucose oxidase enzyme (GOX) is not applicable in foods with a pH < 3.0 due to inactivation. The authors investigated the combined effect of reaction temperature- and pH on the activity of GOX from *Aspergillus Niger*. It was found that the enzyme activity is generally dependent on the pH as well as on the temperature applied during the process. It was further shown that decreasing the temperature from 30°C to 10°C, as well as decreasing the pH from 6.6 to 2.98 each decreases the enzyme activity. Hence, the highest activity was found at optimum pH and temperature conditions and the lowest activity was found at low temperature and low pH. In other words, an increasing low-pH-resistance of the enzyme due to lower incubation temperatures was not found. Thus, in case of enzyme applications, such as the GOX/CAT system, it is usually the case that shifting the reaction conditions out of the optimum (e.g. low temperature combined with low pH) stops the reaction almost completely.

Therefore, there is a need for an improved process of preparing a liquid foodstuff without the addition of taste deteriorating buffering or basic substances, which control the pH during the sugar oxidation process. Moreover, it would be desirable to find process conditions which can avoid the inactivation of the GOX/CAT system under low pH conditions and overcome the disadvantages related to excessive foaming due to aeration, especially in case of concentrated, complex substrate mixtures, such as fruit juices or sugar-containing malt- or tea extracts.

The problem is solved by a process of preparing a liquid foodstuff, comprising: treating at least one juice and/or one extract having a Brix of more than 10°, with carbohydrate oxidase and catalase at a temperature between -10°C and 15°C, and dispersing oxygen or an oxygen-containing gas in the juice and/or extract, without keeping the pH > 3.5 before or during the treatment by addition of buffering substances or basic substances; to obtain a liquid foodstuff, wherein the final pH is lower than 3.5, and wherein the flow rate of the gas is adjusted according to the following equation:

$$(0.001/x) \text{ to } (0.02/x) \text{ L gas/L substrate mixture/min,}$$

with x being the content of oxygen by volume in the gas.

Thus, if, for example, an oxygen-containing gas with an oxygen content by volume of 0.2 (i.e. 20% by volume) is used, the flow rate is from 0.005 to 0.1 L gas/L substrate mixture/min. If pure oxygen (100% by volume, x = 1) is used, the flow rate is 0.001 to 0.02 L gas/L substrate mixture/min.

The present invention also provides a liquid foodstuff according to claim 12, a ready-to-drink composition according to claim 13 and a use according to claim 15.

Further embodiments are set forth in the subclaims 2 to 11, and 14.

It was surprisingly found that at processing temperatures between -10°C and +15°C an efficient enzymatic reaction is possible with juices or extracts, which tend to form excessive foam when aerated, without addition of basic substances. It was found that under processing conditions with the above given flow rates efficient reaction rates are achieved and the enzyme is still highly active although the pH is below recommended processing conditions. A further beneficial consequence of such process conditions is that the process, in contrast to many microbial or enzymatic fermentation processes, must not be conducted under sterile conditions, since the process conditions do not support microbial growth. These findings lead to reduced running costs.

Unexpectedly, the application of the GOX/CAT System in complex, aqueous substrate mixtures with a high foaming capacity and a low pH range under the conditions in accordance with the present invention, is highly efficiently achievable under process conditions, which are shifted from standard processing conditions in terms of processing temperature (30-40°C) and aeration (0.1-5 L air/L substrate mixture/min) as currently suggested as optimal for GOX/CAT reaction systems. It was found that at very low processing temperatures between -10°C and +15°C an efficient enzymatic reaction is also possible for substrates with a foaming capacity higher than glucose solution (e.g. malt or tea extracts, fruit juices) and a pH < 4.0, outside recommended processing conditions, even for substrates having a high Brix, e.g. between 10 and 60°.

In the process in accordance to the present invention, the enzymes are still highly active although the pH is below recommended processing conditions. Although GOX/CAT systems are suggested for optimal processing conditions between 30-40°C and pH values between 3.5 and 7, a very high enzyme activity and stability was surprisingly found within the present invention, even at pH levels between 2.0 and 3.5. It was found that shifting the reaction conditions out of the optimum of the GOX enzyme (e.g. low temperature combined with low pH and low flow rate) still allows an economically feasible and efficient reaction. This effect is very surprising, since it is in strong contrast to the common knowledge of pH- and temperature dependent activity of GOX.

Description of the figure

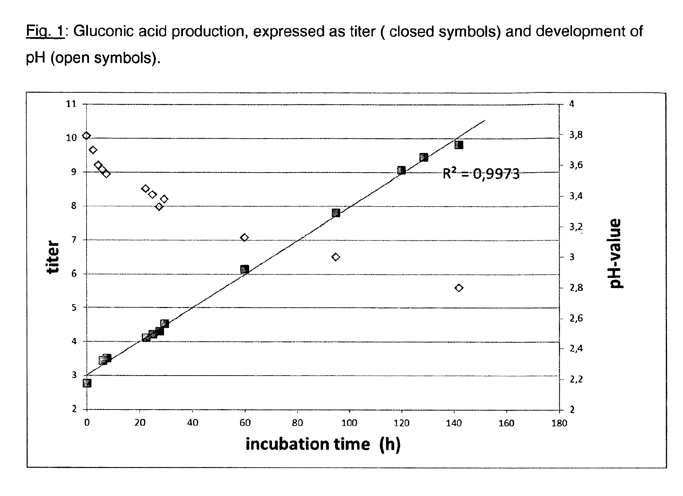

Fig. 1. shows the amount of gluconic acid production and the decrease of pH during the process of preparing a liquid foodstuff according to the present invention.

The term "°Bx" (degrees Brix) refers to a unit representing the soluble solid content in a solution. One degree Brix corresponds to 1 gram of saccharose in 100 grams of saccharose/water solution and thus represents the concentration of the solution as a percentage by weight (% w/w). A solution has 1 °Bx if the density of said solution is the same as a solution of 1 gram of saccharose in 100 grams of saccharose/water solution. The °Bx is usually measured by means of a refractometer.

The term "carbohydrate oxidase" refers to an oxidoreductase which has substrate specificity for carbohydrates. Oxidoreductases are enzymes that catalyze the transfer of electrons from one molecule to another. Oxidases belong to the enzyme class of oxidoreductases. Unless anything else is suggested, the enzymes described below and throughout the description are isolated enzymes with co-factor, if required. One category of oxidoreductases, suitable for use in the present invention, are carbohydrate oxidases that catalyze an oxidation/reduction reaction involving molecular oxygen ($O_2$) as the electron acceptor. In these reactions, oxygen is reduced to water ($H_2O$) or hydrogen peroxide ($H_2O_2$). In particular, carbohydrate oxidases catalyse the conversion of glucose to glucono-$\delta$-lactone that immediately decomposes in water to form corresponding aldonic acids. The process generates hydrogen peroxide. An aldonic acid is any of a family of sugar acids obtained by oxidation of the aldehyde functional group of an aldose to form a carboxylic acid functional group. Thus, their general chemical formula is $HOOC-(CHOH)_n-CH_2OH$. Aldonic acids include, for example, gluconic acid. The carbohydrate oxidase enzymes convert the sugar in the solution to their respective sugar acids. A number of suitable carbohydrate oxidases capable of converting sugar to sugar acids are known and available to the skilled person. Examples of such carbohydrate oxidases include glucose oxidase (EC 1.1.3.4), lactose oxidase, cellobiose oxidase (EC1.1.99.18), pyranose oxidase (EC1.1.3.10), and hexose oxidase (EC1.1.3.5).

The term "juice" refers to juice from fruits, berries, vegetables, herbs, nuts, spices, fungi, cereals, or crop products by pressing or squeezing. The term "extract" is used representatively for all products that are obtained by means of an extraction with a solvent, such as maceration or percolation. From the juice or extract a concentrate can be obtained by selective removal of water from the juice or the extract, preferably until the amount of water remaining in the concentrate is from 20 to 80 % by weight based on the juice or extract. The production of juice concentrates is a common practice and well-known by the person skilled in the art. It can be carried out by any process resulting in a higher Brix value of the juice after the process. Examples for common concentration methods are filtration and evaporation. The term "extract" also refers to water extracted soluble solids, comminutes and purees.

Suitable fruits are, for example apple, passion fruit, pear, peach, plum, apricot, nectarine, grape, cherry, lemon, lime, mandarin, tangerine, orange, grapefruit, tomato, cucumber, pineapple, pomegranate, kiwi, mango, papaya, banana, watermelon, cantaloupe, acerola, blood orange, carob, cherimoya, citrus, dragonfruit, fig, guave, honeydew melon, kaki, lychee, mangosteen, melon, mirabelle, olive, paprika, physalis, prickly pear, pumpkin, quince, starfruit.

Suitable berries are, for example, cranberry, currant, raspberry, gooseberry, blackberry, blueberry, strawberry, acai, aronia berry, black currant, boysenberry, elderberry, goji, lingonberry, mulberry, red currant, rosehip, rowan berry, sea buckthorn, sloe, whitethorn and wood berries.

Suitable vegetables are, for example, potato, lettuce, celery, spinach, cabbage, watercress, rhubarb, carrot, beet, asparagus, beetroot, broccoli, endive, fennel, horseradish, leek, onion, pea and spinach.

Suitable herbs are, for example, dandelion, aloe vera, fennel, ginco, green tee, hibiscus, mallow, rooibos, leaves and tea.

Suitable nuts are, for example, coconut, chestnut, almond, cashew, hazelnut, macadamia, peanut, pecan, pine nut, pistachio, and walnut.

Suitable spices are, for example, cinnamon, ginger, liquorice and vanilla.

Suitable cereals are, for example, barley, flaxseed, bran, maize, millet, oat, rice, rye, wheat, corn and malt.

Suitable crop products are, for example, beans, cacao, cassia, coffee, ginseng, guarana, honey, lenses, lotus, poppy seed, sunflower, soy, and tamarind.

Further suitable components are water extractions, comminutes, parts, purees and fermented parts obtained from above described fruits, berries, vegetables, herbs nuts, spices, fungi and cereals.

The term "without keeping the pH > 3.5 before or during the treatment by addition of buffering substances or basic substances" indicates that during the process in accordance with the present invention no buffering substances or basic substances are added in order to increase the pH to > 3.5. However, the pH of the starting juice or extract may be > 3.5 and may drop to < 3.5 during the process. Furthermore, buffering substances or basic substances may be added as long as the final pH is not > 3.5. In a preferred embodiment in combination with any of the above or below embodiments no buffering or basic substances are added.

The term "oxygen-containing gas" refers to a gas which contain oxygen, such as air, oxygen/air mixtures (oxygen-enriched air), and oxygen/nitrogen mixtures.

Besides air with an oxygen content of approximately 20 to 22% by volume, further oxygen-containing gases, such as oxygen-enriched air can be used for aeration. The oxygen content in the gas mixture may preferably be at least 20% by volume, more preferably from 20 to 95% by volume. Pure oxygen (100% $O_2$) may also be used for aeration. Depending on the oxygen content, the aeration rates may be adjusted as indicated in the above equation.

In a preferred embodiment in combination with any of the above or below embodiments, air is used as the oxygen-containing gas.

In another preferred embodiment in combination with any of the above or below embodiments, the juice is a fruit juice, more preferably a fruit juice from apple, grape, pear, banana, peach, or coconut, or an extract from malt. Most preferably the juice is a fruit juice from apple or grape, or an extract from malt.

In a further preferred embodiment in combination with any of the above or below embodiments, the juice or extract has a Brix of more than 10°, preferably a Brix of at least 25°, more preferably a Brix of at least 30°, and most preferably a Brix of at least 40°, in particular from 40 to 50°.

In another preferred embodiment in combination with any of the above or below embodiments the final pH of the liquid foodstuff is < 3, more preferably < 2.5.

In a preferred embodiment in combination with any of the above or below embodiments, air is blown in the substrate mixture and the flow rate is 0.005 to 0.05 L air/ L substrate mixture/min, more preferably 0.01 to 0.03 L air/L substrate mixture/min, in particular 0.025 L air/ L substrate mixture/min.

In a further preferred embodiment in combination with any of the above or below embodiments the juice and/or extract has a Brix of 10° to 20°, air is used as the oxygen-containing gas and the flow rate is 0.05 to 0.1 L air/L substrate mixture/min. More preferably the juice and/or extract has a Brix of 20° to 30° and the flow rate is 0.025 to 0.05 L air/L substrate mixture/min, and most preferably the juice and/or extract has a Brix of at least 30° and the flow rate is 0.005 to 0.025 L air/L substrate mixture/min.

In a further preferred embodiment in combination with any of the above or below embodiments, the process may be carried out under constant supply of oxygen or oxygen-containing gas by blowing the respective gas in the substrate mixture. Any conventional air blowing apparatus can be used. Furthermore, any conventional aeration system such as e.g. air-injector, aeration frit (membrane system) or internal-loop airlift reactor can be applied.

In another preferred embodiment in combination with any of the above or below embodiments, the process may be carried out under a pulsed supply of air, oxygen or oxygen-containing gas. During a pulsed supply the flow rate is not constant during the process but instead switched on and off alternately. For example the aeration is switched on for 10 minutes at a given flow rate of e.g. 0.2 L gas/L substrate mixture/min and then subsequently switched off for 10 minutes, subsequently switched on again and so on, corresponding to an average flow rate over time of 0.1 L gas/L substrate mixture/min. During the time the aeration is off, the foam layer can (partly) be decomposed and is build up again when the aeration is switched on again. In this context, the flow rates recited within the present invention may be constant aeration rates held during the whole process, but they also may be average flow rates as a result of pulsed aeration.

In a further preferred embodiment in combination with any of the above or below embodiments, the carbohydrate oxidase is selected from glucose oxidase, hexose oxidase and lactose oxidase, of which glucose oxidase is most preferred.

In another preferred embodiment in combination with any of the above or below embodiments, the juice and/or extract further comprises at least one functional compound selected from the group consisting of a stabilizer, a colorant, a sweetener, such as a high intensity sweetener, a thickener, a flavorant, a fruit juice concentrate, an emulsifier, extracts and/ or pieces from fresh or fermented plants or parts of plants and extracts and/or pieces from fresh or fermented fruits, berries, vegetables, herbs, nuts, spices, fungi and cereals. These can serve for example, as colorant and flavorant.

According to the invention, the term "flavorant" refers to flavorants derived from the edible reproductive part of a seed plant, especially one having a sweet pulp associated with the seed, for example, apples, oranges, lemon, and limes. It also includes flavorants derived from parts of the plant other than the fruit, for example, flavorants derived from nuts, bark, roots and leaves. Also included within this term are synthetically prepared flavorants made to simulate flavorants derived from natural sources. Examples of flavorants include cola flavorants, tea flavorants, cinnamon, allspice, clove, coffee flavorants, citrus flavorants including orange, tangerine, lemon, lime and grape fruit flavorants. A variety of other fruit flavors can also be used such as apple, grape, cherry, pineapple, coconut and the like. Fruit juices, including orange, lemon, tangerine, lime, apple and grape can also be used as flavorant.

Suitable stabilizers, colorants, sweeteners and flavorants are apple, passion fruit, cranberry, pear, peach, plum, apricot, nectarine, grape, cherry, currant, raspberry, gooseberry, blackberry, blueberry, strawberry, lemon, lime, mandarin, tangerine, orange, grapefruit, potato, tomato, lettuce, celery, spinach, cabbage, watercress, dandelion, rhubarb, carrot, beet, cucumber, pineapple, coconut, pomegranate, kiwi, mango, papaya, banana, watermelon, cantaloupe, tea, barley, flaxseed, bran, maize, millet, oat, rice, rye, wheat, corn, lenses, malt, acai, acerola, aloe vera, apricot, aronia berry, asparagus, banana, bean, beet, beetroot, black currant, blood orange, boysenberry, broccoli, cabbage, cacao, cantaloupe, carob, carrot, cassia, dandelion, cherimoya, cherry, chestnut, cinnamon, citrus, coffee, cranberry, currant, dragonfruit, elderberry, endive, fennel, fig, ginger, ginco, ginseng, goji, guarana, guave, hibiscus, honey, honeydew melon, horseradish, kaki, kiwi, leek, lingonberry, liquorice, lotus, lychee, mallow, mangosteen, melon, mirabelle, mulberry, nectarine, almond, cashew, hazelnut, macadamia, peanut, pecan, pine nut, pistachio, potato, walnut, olive, onion, orange, papaya, paprika, passion fruit, pea, pear, physalis, pineapple, plum, pomegranate, poppy seed, prickly pear, pumpkin, quince, raspberry, red currant, rooibos, rosehip, rowan berry, spinach, sea buckthorn, sloe, soy, starfruit, strawberry, sunflower, tamarind, tangerine, tomato, vanilla, watercress, watermelon, whitethorn, wood berries.

In a further preferred embodiment in combination with any of the above and below embodiments, the mixture further comprises additional sugar, preferably selected from the group consisting of maltose, lactose, glucose, hexose, a hydrolyzed saccharose concentrate, an invert sugar syrup, a glucose syrup, a natural fruit sugar from juice, fruit juice concentrate (e.g. Fruit-up®), and mixtures thereof. Preferred sugars are glucose, lactose and hexose of which glucose is most preferable.

In a preferred embodiment in combination with any of the above or below embodiments the solution used in the present invention further contains at least one component selected from the group consisting of fruits, berries, vegetables, herbs, nuts, spices, fungi, cereals (grains), and crop products.

In a further preferred embodiment in combination with any of the above or below embodiments, the at least one component selected from the group consisting of fruits, berries, vegetables, herbs, nuts, spices, fungi, cereals (grains), and crop products may be added to the liquid foodstuff after treatment with carbohydrate oxidase and catalase.

In a preferred embodiment in combination with the above and below embodiments, the liquid foodstuff comprises an active starter culture.

An active starter culture is a microbiological culture which actually performs the fermentation. These starter cultures usually consist of a cultivation medium, such as grains, seeds, or nutrient liquids that have been well colonized by the microorganisms used for the fermentation. Suitable active starter cultures are selected from the group of the family of *Lactobacillaceae, Bifodobacteriaceae, Acetobacteraceae, Rhizopus, Aspergillus, Candidia, Geotrichum, Penicillium* and *Saccharomyces,* wherein a gluconobacter subspecies of *Acetobacteraceae* is preferred.

In a further preferred embodiment in combination with any one of the above or below embodiments, in the process according to the present invention, the liquid foodstuff is subsequently treated with an active starter culture for fermentation purposes. Suitable active starter cultures are selected from the group of the family of *Lactobacillaceae, Bifodobacteriaceae, Acetobacteraceae, Rhizopus, Aspergillus, Candidia, Geotrichum, Penicillium* and *Saccharomyces,* wherein a gluconobacter subspecies of *Acetobacteraceae* is preferred. More preferably the active starter culture is selected from the group of *Saccharomyces.* Particularly preferable, the active starter culture is *Saccharomyces cerevisiae.*

In a further preferred embodiment in combination with any of the above and below embodiments, the activity of carbohydrate oxidase is from 1000 units/g to 50000 units/g, more preferably from 1650 units/g to 10000 units/g, in particular 10000 units/g. Particularly preferably the enzyme is glucose oxidase with an activity of from 10000 units/g to 15000 units/g.

In another preferred embodiment in combination with any of the above and below embodiments, the activity of catalase is from 10000 units/g to 100000 units/g, more preferably from 16500 units/g to 65000 units/g, in particular 25000 units/g.

The enzyme activity is measured in "units/g", wherein 1 unit is defined as the amount of enzyme, which converts 1 micromole of substrate in a minute, i.e. 1 unit = 1$\mu$mol/min under standard assay conditions, i.e. optimum conditions in terms of pH and temperature. Another measure of the catalytic activity of an enzyme is "katal", 1 katal = 1 mol/s, 1 unit = 16.67 x 10$^{-9}$ katal. The enzyme activity given herein refers to the activity of enzyme preparations, wherein the pure enzyme is mixed with a carrier material, such as maltodextrin.

The amount of oxidase to be used will generally depend on the specific requirements and on the specific enzyme. The amount of oxidase addition preferably is sufficient to generate the desired degree of conversion of sugar to its acid within a specified time. Typically, a carbohydrate oxidase addition may be in the range from 50 to 5000 ppm per kg of sugar in the substrate mixture, preferably from 200 to 2000 ppm per kg of sugar in the substrate mixture, more preferably from 500 to 1500 ppm per kg of sugar in the substrate mixture, and in particular from 250 to 1250 ppm per kg of sugar in the substrate mixture.

According to the process of the present invention a catalase (EC 1.1 1.1.6) is added in combination with any of the above or below embodiments. Catalase is added to prevent limitation of the reaction driven by the carbohydrate oxidase and to eliminate unwanted $H_2O_2$ in the end-product. As described above carbohydrate oxidase is dependent on oxygen, but produces hydrogen peroxide. The advantage of adding catalase to the process of the present invention is that the carbohydrate oxidase is provided with oxygen and at the same time is the hydrogen peroxide which has strong oxidizing properties removed.

In one preferred embodiment of the invention, the carbohydrate oxidase and the catalase are added at the same time. In another preferred embodiment, the enzymes are added at different times, for example, the carbohydrate oxidase is added first and after some time the catalase is added. However, in the latter case, one has to contend with the generated $H_2O_2$, which might damage the liquid beverage concentrate and also the enzyme activities.

In combination with any of the above or below embodiments catalase is added in an amount that lowers the concentration of $H_2O_2$ as compared to a similar process without catalase. Preferably, the amount of catalase added to the process as described herein, is an amount that is sufficient to obtain at least 25%, 50%, 75%, 85% or 95% decrease in the amount of $H_2O_2$ as compared to a comparative control process where the only comparative difference is that catalase is not added, even more preferably the amount of catalase added to the process as described herein, is an amount that is sufficient to obtain a 100% decrease in the amount of $H_2O_2$ as compared to a comparative control process, where the only comparative difference is that catalase is not added. Preferably, the catalase is added in an amount that also improves the degree of conversion of sugars to its acids.

The amount of oxidase to catalase to be used will generally depend on the specific requirements and on the specific enzyme activity (units per gram) of the selected enzyme preparation. It can be determined and adapted to the process of the present invention by a person skilled in the art. Specific enzyme activities can vary for different enzyme preparations, but are in a specific range from which a person skilled in the art can deduce optimized ratios of oxidase and catalase in ppm per kg of substrate (sugar).

In a further preferred embodiment in combination with any of the above or below embodiments, the activity ratio of carbohydrate oxidase to catalase is from 1 : 1 to 1 : 100, preferably 1 : 10 to 1 : 20.

In a preferred embodiment in combination with any of the above or below embodiments, the pH of the liquid foodstuff is not buffered or otherwise kept within the recommended processing conditions of pH > 3.5 during the process, e.g. by means of addition of alkali (base) or buffers during the process or e.g. by means of partially removing produced acid from the process media.

Substances capable of neutralizing the produced acid are not added during the present process, e.g. no bases such as $Ca(OH)_2$, $KOH$, $NaOH$, $Mg(OH)_2$, $CaCO_3$, $MgCO_3$, $Mg(OH)_2$, $Na_2CO_3$, $K_2CO_3$, $(NH_4)_2CO_3$ and $NH_4OH$, $NaHCO_3$, $KHCO_3$ are added during the treatment of the juice and/or extract with carbohydrate oxidase and catalase.

Substances capable of buffering the produced acid are not added during the present process, e. g. no buffering substances such as sodium phosphate buffer, carbonate buffer, sulfate buffer, lactate buffer and citrate buffer are added before or during the treatment of the juice and/or extract with carbohydrate oxidase and catalase.

The process is conducted at a temperature of -10° to +15° C and the temperature is maintained during the process. In a preferred embodiment in combination with any of the above or below embodiments, the temperature is between -5° and +10°C, more preferably the temperature is between +2° and +8° C and in particular between 5°C and 6°C.

Aqueous solutions that contain dissolved substances are affected by the well-known phenomena of freezing point depression. In this context, the lowest temperature at which the process is feasible is when the substrate liquid is as cold as possible, without being frozen. Due to freezing point depression of concentrated substrate mixtures, the processing temperature can be below 0°C.

In the process of preparing the liquid foodstuff of the present invention the treatment may be conducted several times. Thus, the treatment of the juice or extract with carbohydrate oxidase and catalase may be repeated several times, until a sufficient amount of acid is produced to reach a pH lower than 3.5, preferably to reach a pH lower than 3.0.

A suitable treatment (incubation) time allows the degree of conversion of sugars to acids of interest. A single treatment (incubation) or several treatments of the juice and/or extract with carbohydrate oxidase and catalase are possible. Generally, a suitable single treatment (incubation) time is selected in the range from 1 hour to 10 days, preferably, from 24 hours to 9 days, most preferably from 72 hours to 8 days. When the treatment is repeated several times, the treatments (incubations) time is selected in the range from 1 day to 21 days.

A given amount of enzyme can generally be added once at a time or in several portions, subsequently. A skilled in the art person may be able to optimize the all-over process speed of the enzyme reaction using a given amount of enzyme with a suitable segmentation. The treatment may be repeated 2 to 5 times, preferably 3 times.

In a preferred embodiment in combination with any of the above or below embodiments, the treatment is a single treatment. More preferably, the treatment is a single treatment and the treatment (incubation) time is in the range of 3 days to 7 days, in particular 5 to 6 days.

A particularly preferred process of preparing a liquid foodstuff comprises treating a juice and/or extract comprising glucose and malt extract, said juice and extract having a Brix of 25° or higher, with glucose oxidase and catalase, without adjusting the pH before or during the treatment by addition of buffering substances or basic substances to obtain a liquid foodstuff, wherein the final pH is lower than 3.

Another particularly preferred process of preparing a liquid foodstuff comprises treating a juice from apple or grape having a Brix of 40° or higher, with glucose oxidase and catalase, without adjusting the pH before or during the treatment by addition of buffering substances or basic substances to obtain a liquid foodstuff, wherein the final pH is lower than 3.

The process in accordance with the present invention may preferably be carried out under constant supply of oxygen by pumping air in the juice or extract being treated. Any conventional air pumping apparatus can be used. Furthermore, any conventional aeration system such as e.g. air-injector, aeration frit (membrane system) or internal-loop airlift reactor can be applied. Preferably air is used and the flow rates are in the range of 0.005-0.05 L air/L substrate mixture/min.

A further particularly preferred process of preparing a liquid foodstuff according to the present invention comprises treating a fruit juice from apple or grape, said juice having a Brix of 40° or higher, with glucose oxidase and catalase at a temperature between -10°C and +15°C and with a flow rate of 0.005 to 0.05 L air/L substrate mixture/min, without adjusting the pH before or during the treatment by addition of buffering substances or basic substances to obtain a liquid foodstuff, wherein the final pH is lower than 3.

Carrying out the process of the present invention under any combination of the above mentioned conditions, i.e., temperature conditions, initial sugar content of the juice and/or extract and consecutive treatments of the juice and/or extract with carbohydrate oxidase and catalase, is acceptable, as long as the values of these quantities fall in the respective ranges stated above (e.g. temperature of -10°C to +15°C, a Brix of more than 10°, flow rates of 0.005 to 0.1 L air/L substrate mixture/min), and the resulting liquid foodstuff has the desired acidity of pH lower than 3.5. Furthermore, only small amounts of enzymes are required.

Combinations which lead to short incubation times, simplified process in term of steps performed and cost effectiveness, are preferred.

The present invention further provides a ready-to-drink composition comprising a diluent and the liquid foodstuff obtained by the process of the present invention.

In a preferred embodiment in combination with any of the above and below embodiments, suitable diluents are water (including carbonated water), fruit juice and/or additional substances of the group of stabilizer, colorant, sweetener, thickener and flavorant.

According to the present invention, a fruit juice suitable as a diluent refers to citrus and non-citrus juices including vegetable juices. The fruit juice can be provided as juice made from, for example, apple, passion fruit, cranberry, pear, peach, plum, apricot, nectarine, grape, cherry, currant, raspberry, gooseberry, blackberry, blueberry, strawberry, lemon, lime, mandarin, tangerine, orange, grapefruit, potato, tomato, lettuce, celery, spinach, cabbage, watercress, dandelion, rhubarb, carrot, beet, cucumber, pineapple, coconut, pomegranate, kiwi, mango, papaya, banana, watermelon and cantaloupe. The term "fruit juice" also refers to water extracted soluble solids, fruit juice concentrates, comminutes and purees.

In a further preferred embodiment in combination with any of the above and below embodiments, the ready-to-drink composition may comprise at least one functional compound selected from the group of stabilizers, colorants, flavorants and acidifiers.

The present invention further provides the use of the concentrated liquid foodstuff obtained by the process of the present invention for the preparation of a ready-to-drink composition.

The following examples describe specific embodiments of the present invention.

Examples

**Example 1:**

Commercial apple juice concentrate (71°Brix) was diluted with water to 41.7°Brix. The diluted apple juice concentrate had a pH of 3.8 and a titer of 2.7. 6900 Kg of this mixture was treated with 55 ppm GOX preparation (Hyderase, Amano Enzymes, with a declared activity of 15.000 units/g) and 660 ppm CAT preparation (Catazyme 25L, Novozymes, with a declared activity of 25.000 units/g). No other substances, such as buffering or de-foaming agents were added. The process was conducted in a cylindrical stainless steel tank with a volume of 12000 L. Without any foam there was about 200 cm free space from the surface of the substrate liquid to the lid of the tank, to have enough space for potential foam development due to aeration. Constant supply of oxygen was given by injection of air into the mixture, with an average flow rate of 0.01 L air/L substrate mixture/min. This flow rate led to a development of a foam layer of about 60 to 70 cm, which was constant during the process and did not cause any technical problems during the process. The whole process was held continuously at 5 to 6°C for 6 days. After 6 days, the apple juice had a pH of 2.8 and contained about 76 g/L gluconic acid. The mixture was then pasteurized at 90°C for 45 sec. to inactivate residual enzyme activity. The development of the process was regularly controlled by measurement of the titer. The titer is the amount of 0.5 M NaOH that is required to neutralize 10 g sample volume to a pH of 8.1; 1 ml of 0.5 M NaOH corresponds to approximately 1% of gluconic acid. The development of gluconic acid production during the process, expressed as titer, is shown in Fig. 1.

It can be seen that the conversion rate of sugar into acid, expressed as the developing titer is surprisingly almost linear, despite a constantly lowering pH-value. This example shows that the GOX/CAT process can be held on industrial scale at very low pH, temperature and flow rate, altogether shifted far away from recommended processing conditions, without problems of excessive foaming. Nevertheless, surprisingly the process does not require the use high concentrations of GOX or CAT. Hence, enzyme costs in example 1 were less than 0.1 Euro/Kg of substrate mixture. As a further beneficial consequence of the applied process conditions, it was found that the process must not be conducted under sterile conditions, in contrast to many microbial or enzymatic fermentation processes that are held under optimal conditions, since the process and product conditions do not support microbial growth. This fact also leads to a cost advantage.

**Example 2:**

The GOX/CAT treated apple juice concentrate (example 1) was mixed with 1:1 (w/w) with commercial available apple juice concentrate and further diluted with mineral water to 4-8°Brix to create a refreshing sweet/sour spritzer-type of beverage with a delicious, unique taste, without any unwanted off-taste.

**Example 3:**

Commercial malt extract (79°Brix) was diluted with water to 30°Brix. The diluted malt extract had a pH of 5.25 and a titer of 1.0. 20 Kg of this mixture was treated with 55 ppm GOX preparation (Hyderase, Amano Enzymes, with a declared activity of 15.000 units/g) and 660 ppm CAT preparation (Catazyme 25L, Novozymes, with a declared activity of 25.000 units/g). The whole process was held continuously at 4°C by means of a tempered double-walled glass-vessel for 4 days. Constant supply of oxygen was given by pumping air in the concentrate through an aeration frit with a volumetric flow rate of 0.1 L air/L substrate mixture/min. This flow rate led to the development of a foam level of about 20 cm, which was the maximal foam development that was technically acceptable and did not cause any technical problems during the process.

Table 1 shows the development of titer and pH during the incubation. Analytical results showed < 5 g/L of residual glucose in the malt extract at the end of the incubation. A slight decrease of reaction speed during the process is likely due to the depletion of the substrate glucose.

Table 1: development of titer and pH during the incubation of 30°Brix malt extract.

| Incubation time | titer | pH |
|---|---|---|
| 0 | 1 | 5.25 |
| 24 | 2.7 | 3.53 |
| 48 | 3.5 | 3.26 |
| 72 | 4.22 | 2.98 |
| 96 | 4.69 | 2.97 |

**Claims**

1. A process of preparing a liquid foodstuff, comprising:

   treating at least one juice and/or one extract having a Brix of more than 10°, with carbohydrate oxidase and catalase at a temperature between -10 °C and +15 °C to obtain a substrate mixture, and
   dispersing oxygen or an oxygen-containing gas in the substrate mixture,
   without keeping the pH > 3.5 before or during the treatment by addition of buffering substances or basic substances;
   to obtain a liquid foodstuff, wherein the final pH is lower than 3.5;
   wherein the flow rate of the gas is adjusted according to the following equation:

## (0.001/x) to (0.02/x) L gas/L substrate mixture/min,

with x being the content of oxygen by volume in the gas.

2. The process according to claim 1, wherein the juice and/or extract has a Brix of at least 30° and the flow rate is (0.001/x) to (0.005/x) L gas/L substrate mixture/min.

3. The process according to claim 1 or 2, **characterized in that** the carbohydrate oxidase is a glucose oxidase.

4. The process according to any one of claims 1 to 3, **characterized in that** the juice and/or extract further comprises at least one functional compound selected from the group consisting of a stabilizer, a colorant, a sweetener, a thickener and a flavorant.

5. The process according to any one of claims 1 to 4, **characterized in that** the mixture further comprises additional sugar, preferably selected from the group consisting of maltose, lactose, glucose, hexose, a hydrolyzed saccharose concentrate, an invert sugar syrup, a glucose syrup, a natural fruit sugar from fruit juice and fruit juice concentrate.

6. The process according to any one of claims 1 to 5, **characterized in that** the liquid foodstuff comprises an active starter culture.

7. The process according to any one of claims 1 to 6 **characterized in that** the liquid foodstuff is subsequently treated with an active starter culture for fermentation.

8. The process according to any one of claims 6 or 7, **characterized in that** the active starter culture is selected from the group consisting of the family of *Lactobacillacae, Bifodobacteriaceae, Acetobacteraceae, Rhizopus, Aspergillus, Candidia, Geotrichum, Penicillium* and *Saccharomyces.*

9. The process according to any one of claims 1 to 8, **characterized in that** the activity of carbohydrate oxidase is from 1 000 units/g to 50 000 units/g.

10. The process according to any one of claims 1 to 9 **characterized in that** the activity of catalase is from 10 000 units/g to 100 000 units/g.

11. The process according to any one of claims 1 to 10, **characterized in that** the activity ratio of carbohydrate oxidase to catalase is from 1 : 1 to 1 : 100, preferably from 1 : 10 to 1 : 20.

12. A liquid foodstuff obtainable by the process according to any one of claim 1 to 11.

13. A ready-to-drink composition, comprising a diluent and the liquid foodstuff according to claim 12.

14. The ready-to-drink composition according to claim 13, further comprising at least one functional compound selected from the group of stabilizers, colorants, flavorants and acidifiers.

15. Use of the liquid foodstuff of claim 12 for the preparation of a ready-to-drink composition.

Fig. 1: Gluconic acid production, expressed as titer ( closed symbols) and development of pH (open symbols).

**EP 2 820 961 A1**

Europäisches
Patentamt

European
Patent Office

Office européen
des brevets

# EUROPEAN SEARCH REPORT

Application Number

EP 13 00 3376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2012/167872 A1 (WILD GMBH & CO KG RUDOLF [DE]; HEIDEBACH THOMAS [DE]; KELLER CHRISTINE) 13 December 2012 (2012-12-13) * paragraph [0061]; claims 1,16-18; examples 1, 4 * | 1-15 | INV. A23L2/02 A23L2/54 A23L2/84 A23L1/185 C12N9/04 C12N9/08 C12P7/58 |
| A | US 2002/119538 A1 (LANTERO ORESTE J [US] ET AL) 29 August 2002 (2002-08-29) * the whole document * | 1-15 | |
| A | US 4 758 515 A (BAERWALD GUENTER [DE] ET AL) 19 July 1988 (1988-07-19) * the whole document * | 1-15 | |
| A | EP 0 194 043 A1 (NOVO INDUSTRI AS [DK]) 10 September 1986 (1986-09-10) * the whole document * | 1-15 | |
| A | ROSENBERG M ET AL: "GLUCONIC ACID PRODUCTION BY ASPERGILLUS NIGER WITH OXYGEN SUPPLY BY HYDROGEN PEROXIDE", BIOPROCESS ENGINEERING, SPRINGER VERLAG, DE, vol. 7, no. 7, 1 January 1992 (1992-01-01) , pages 309-313, XP002011042, ISSN: 0178-515X, DOI: 10.1007/BF00705160 * the whole document * | 1-15 | TECHNICAL FIELDS SEARCHED (IPC) A23L C12N C12P |

The present search report has been drawn up for all claims

| Place of search | Date of completion of the search | Examiner |
|---|---|---|
| The Hague | 4 December 2013 | Diller, Reinhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 00 3376

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2013

| Patent document cited in search report | | Publication date | Patent family member(s) | | Publication date |
|---|---|---|---|---|---|
| WO 2012167872 | A1 | 13-12-2012 | EP | 2532253 A1 | 12-12-2012 |
| | | | WO | 2012167872 A1 | 13-12-2012 |
| US 2002119538 | A1 | 29-08-2002 | US | 2002119538 A1 | 29-08-2002 |
| | | | US | 2004077062 A1 | 22-04-2004 |
| US 4758515 | A | 19-07-1988 | CA | 1274483 A1 | 25-09-1990 |
| | | | DE | 3508387 C1 | 17-07-1986 |
| | | | EP | 0201676 A2 | 20-11-1986 |
| | | | US | 4758515 A | 19-07-1988 |
| EP 0194043 | A1 | 10-09-1986 | AR | 240959 A1 | 27-03-1991 |
| | | | AU | 576718 B2 | 01-09-1988 |
| | | | AU | 5331386 A | 14-08-1986 |
| | | | CA | 1266445 A1 | 06-03-1990 |
| | | | DE | 3663681 D1 | 06-07-1989 |
| | | | DK | 58385 A | 09-08-1986 |
| | | | EP | 0194043 A1 | 10-09-1986 |
| | | | ES | 8704199 A1 | 01-06-1987 |
| | | | GR | 860361 A1 | 10-06-1986 |
| | | | NZ | 215064 A | 28-10-1988 |
| | | | PT | 81995 A | 01-03-1986 |
| | | | US | 4675191 A | 23-06-1987 |
| | | | ZA | 8600915 A | 24-09-1986 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9635800 A
- WO 9724454 A
- WO 03031635 A
- WO 2010106170 A
- EP 1935257 A
- EP 0017708 A
- WO 2009016049 A
- WO 2012167872 A

### Non-patent literature cited in the description

- **MIRON et al.** A mathematical model for glucose oxidase kinetics, including inhibitory, deactivant and diffusional effects and their interactions. *Enzyme and microbial technology,* 2004, vol. 34, 513-522
- **WONG et al.** Glucose oxidase, natural occurrence, function, properties and industrial applications. *Applied Microbial Biotechnology,* 2008, vol. 78, 927-938
- **KLEIN et al.** Biotransformation of glucose to gluconic acid by Aspergillus Niger- study of mass transfer in airlift reactor. *Biochemical Engineering Journal,* 2002, vol. 10, 197-205
- Handbook of Food Enzymology. Marcel Dekker, 2003, 425-432
- **HATZINIKOLAOU et al.** New glucose oxidase from Aspergillus Niger. characterisation and regulation studies of enzyme and gene. *Applied Microbial Biotechnology,* 1996, vol. 46, 371-381
- **GIBSON et al.** Kinetics and Mechanism of Action of Glucose Oxidase. *The Journal of Biological Chemistry,* 1964, vol. 239, 3927-3934
- **BANKAR et al.** Glucose oxidase - an overview. *Biotechnology advances,* 2009, vol. 27, 489-501
- **HERRMANN et al.** Die Aktivität von Glucoseoxidase in Abhängigkeit von Temperatur. *Wassergehalt und pH-Wert, Food/Nahrung,* 1965, vol. 9 (6), 659-667